# EUROPEAN PATENT APPLICATION

(11) **EP 4 542 504 A1**
(43) Date of publication of application: **23.04.2025**
(21) Application number: 23204069.1
(22) Date of filing: 17.10.2023
(51) Int. Cl.: G06V 10/764, G06V 20/52, G06V 20/59, G08B 21/24

(54) **A VEHICLE TRUNK MONITORING SYSTEM**

(71) Applicant: Valeo Comfort and Driving Assistance, 94000 Créteil (FR)
(72) Inventor: SOBH, Ibrahim, 94000 Créteil (FR); MAHDY, Alaa, 94000 Créteil (FR); DAWOOD, Mena, 94000 Créteil (FR)
(74) Representative: Delplanque, Arnaud

(57) **Abstract**

The proposed invention concerns a vehicle trunk monitoring system (1) comprising:
- at least one trunk sensor (2) configured to capture an image of the interior of the trunk (T);
- a processing unit (3) configured to analyze images received from the trunk sensor (2);
- a user interface (4, 5) configured to display an information (IM) based on the images processed by the processing unit.

## Description

The field of the present invention is that of a vehicle trunk monitoring system.

On long-distance drives, vehicle passengers (the users) may encounter situations where they need to check if a certain object is present in the vehicle's trunk and/or the status of these objects, leading to potential safety hazards when pulling over on the side of the road. There is a need for a convenient and safe solution that enables users to verify the presence of trunk contents without interrupting the journey. In another situation, the user may be away from the vehicle and need to locate a specific item in the trunk.

For this purpose, the invention proposes a vehicle trunk monitoring system comprising:
- at least one trunk sensor configured to capture an image of the interior of the trunk;
- a processing unit configured to analyze images received from the trunk sensor;
- a user interface configured to display an information based on the images processed by the processing unit.

According to an aspect of the invention, the vehicle trunk monitoring system comprises a plurality of trunk sensors.

According to an aspect of the invention, the trunk sensor comprises at least one of the following sensors:
- a camera, in particular an RGB camera that captures images using red, green, and blue color channels, the camera being coupled with a light source configured to illuminate the trunk;
- an X-Ray sensor configured to detect for instance hidden contents inside luggage or boxes;
- a thermal camera configured to detect temperature on variable temperature objects;
- a 3D scanner or lidar.

An RGB camera provides images that reflect colors and textures of objects in the trunk.

A 3D scanner or lidar enable to capture images with more accurate dimensions and depth.

According to an aspect of the invention, the plurality of trunk sensors provide a multi-view or multi-modal representation of the trunk's contents, addressing various features.

The invention enables to monitor the content of the trunk using multiple sensors for multiple intuitive views. For instance, the multiple intuitive views include RGB camera images, X-Ray images, and thermal images.

For instance, an RGB camera may be combined with an X-Ray sensor to provide images that reflect colors and textures of objects and disclose hidden contents inside luggage or boxes.

According to an aspect of the invention, the processing unit is configured to send an image captured by the trunk sensor to the user interface.

The invention enables an easy access to the vehicle trunk. The driver or passenger of the vehicle can check if a certain object is present in the trunk without having to pull over on the side of the road, thanks to the trunk sensors. Additionally, the user can be away from the vehicle and can look for a certain object in the trunk of the vehicle without having to physically go to and open the trunk.

According to an aspect of the invention, the user interface comprises a screen, in particular:
- a screen permanently mounted on the vehicle, or
- a screen of a smartphone, or
- a screen on a headset or glasses to be worn by a passenger of the vehicle.

According to an aspect of the invention, the user interface comprises at least one vehicle onboard touch screen for monitoring the vehicle trunk monitoring system.

According to an aspect of the invention, the user interface may comprise at least two touch screens each for a passenger (including the driver).

According to an aspect of the invention, the user interface is configured to allow the passenger to select the type of trunk view to be displayed on the user interface.

According to an aspect of the invention, the user interface is configured to provide a 3D zoomable view generated from images captured by the trunk sensors.

According to an aspect of the invention, the user interface is configured to allow the user to control the vehicle trunk monitoring system, in particular the sensors.

According to an aspect of the invention, the user interface is configured to allow the user to select the trunk sensors to be used to generate the trunk image.

According to an aspect of the invention, the user interface is configured to provide a trunk's history through time-stamped screenshots derived from detected trunk change. Screenshots may be made across all the enabled sensors or according to the user's entered preferences.

According to an aspect of the invention, the vehicle trunk monitoring system comprises a memory to memorize time-stamped screenshots generated by the trunk sensors.

According to an aspect of the invention, the user interface, which is a smartphone, is configured to enable monitoring and control of the vehicle trunk monitoring system, in particular through a secure connection between the smartphone and the processing unit of the vehicle trunk monitoring system.

According to an aspect of the invention, the processing unit of the vehicle trunk monitoring system is set up to operate a deep learning computer vision model capable of detecting specified objects, preferably across all the sensors.

According to an aspect of the invention, the processing unit of the vehicle trunk monitoring system is configured to operate a neural network deep learning method to detect specified objects.

According to an aspect of the invention, the neural network deep learning method provides preferably both high detection accuracy and speed.

According to an aspect of the invention, the neural network deep learning method uses an object detection model based on the boundary of the detected object (such as bounding box, or polygon for instance), in addition to the classification of the detected objects.

Such neural network deep learning method can be the YOLOv8 model or any other opensource or proprietary model.

According to an aspect of the invention, the processing unit of the vehicle trunk monitoring system is configured to receive a request to locate a specific object, such as a red suitcase, and to conduct an image analysis using data provided by the trunk sensors to ascertain whether the specific object is present in the trunk or not.

According to an aspect of the invention, the vehicle trunk monitoring system is configured to deliver notifications or alarms based on detections made in the trunk by the trunk sensors. The user could get notifications/alarms on either a vehicle screen, a mobile phone, or any connected/authenticated device.

According to an aspect of the invention, the vehicle trunk monitoring system is configured to deliver notifications or alarms if a weapon, food, or an animal is detected for an extended period of time in the trunk.

Users may receive notifications or alarms based on their chosen configuration. For instance, they may receive an alarm if a weapon, food, or an animal is detected for an extended period of time. This feature proves particularly useful in car rental scenarios.

According to an aspect of the invention, the user interface is configured to enable the user to inquire about the status of specific objects using either text or voice, through either a phone or the car's interior user interface.

According to an aspect of the invention, the processing unit of the vehicle trunk monitoring system is configured to display information of the historical content of the trunk.

The invention also relates to a vehicle equipped with a trunk monitoring system as disclosed above.

The invention also relates to a vehicle trunk monitoring method comprising the following steps:
- capture an image of the interior of the trunk by using at least one trunk sensor;
- display an information, such as an image, derived from of the captured images.

The method may comprise the following steps:
- capture an image of the interior of the trunk by using at least one trunk sensor;
- display images captured by the trunk sensor(s) so that the user can inspect the content of the trunk.

The method may comprise the following steps:
- receive a request to locate a specific object in the trunk,
- conduct an image analysis using data provided by the trunk sensors to ascertain whether the specific object is present in the trunk or not.

The method may comprise the following steps:
- continuously monitor the trunk content;
- analyze a status of the object to detect abnormal conditions such as a movement or a change in the temperature;
- deliver notifications or alarms based on detections made in the trunk by the trunk sensors.

The status of the object can be "Normal" or "Abnormal" depending on detected movements or change I the temperature of the object.

Further features, details and advantages of the invention will become more clearly apparent from reading the description given below by way of indication with reference to the drawings, in which:
[Fig 1] is a schematic view of a trunk monitoring system according to an embodiment of the invention;
[Fig. 2] represent an image displayed by the trunk monitoring system of figure 1;
[Fig. 3] is a block diagram representing a method carried out by the trunk monitoring system of figure 1,
[Fig. 4] is a block diagram representing another method carried out by the trunk monitoring system of figure 1,
[Fig. 5] is a block diagram representing another method carried out by the trunk monitoring system of figure 1.

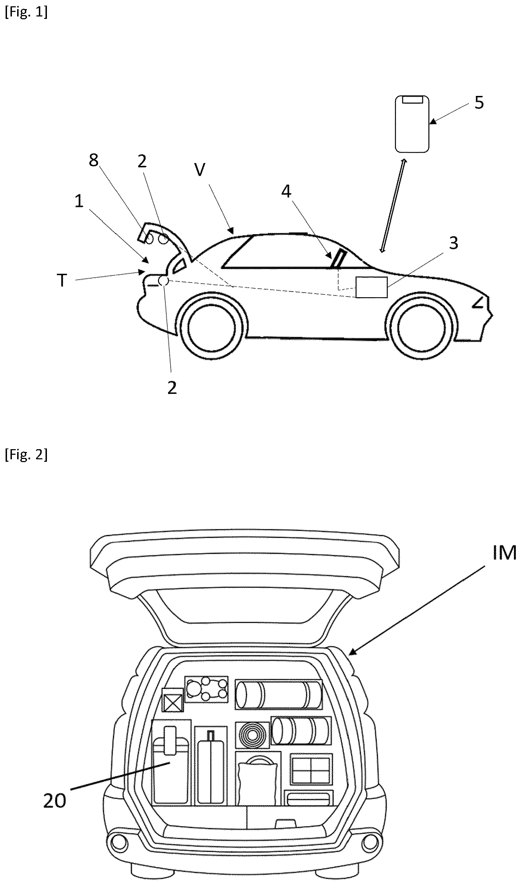

Figure 1 is a schematic view of a vehicle V equipped with a trunk monitoring system 1 according to an embodiment of the present invention.

The vehicle trunk monitoring system 1 comprises trunk sensors 2 placed in the vehicle trunk T configured to capture images of the interior of the trunk T.

The vehicle trunk monitoring system 1 further comprises a processing unit 3 configured to analyze images captured by the trunk sensors 2, and a user interface 4, 5 configured to display an information such as images, based on the images processed by the processing unit 3.

The trunk sensors 2 comprise at least some of the following sensors:
- an RGB camera that captures images using red, green, and blue color channels, the camera being coupled with a light source 8 configured to illuminate the trunk T;
- an X-Ray sensor configured to detect hidden contents inside objects 20 (luggage or boxes) placed in the trunk T;
- a thermal camera configured to detect temperature on objects 20;
- a 3D scanner or lidar.

The plurality of trunk sensors 2 provide a multi-view or multi-modal representation of the trunk's contents, addressing various features.

The user interface 4, 5 may be configured to display images of multiple views including RGB camera images, X-Ray images, and thermal images. The RGB camera may be combined with the X-Ray sensor to provide images that reflect colors and textures of objects and disclose hidden contents inside luggage or boxes.

An RGB camera image IM displayed on a screen of the user interface 4, 5 is represented on figure 2.

The user interface 4, 5 comprises a screen, in particular:
- a touch screen 4 permanently mounted on the vehicle, and
- a screen 11 of a smartphone 5.

The onboard user interface 4 is connected to the processing unit 3 using a wired connection.

The user interface 5 (smartphone) is connected to the processing unit 3 using a wireless connection such as a Bluetooth connection. The user interface, which is a smartphone 5, is configured to enable monitoring and control of the vehicle trunk monitoring system, in particular through a secure connection between the smartphone and the processing unit of the vehicle trunk monitoring system.

The user interface 4, 5 enables controlling of the vehicle trunk monitoring system 1. In particular, the user interface 4, 5 is configured to allow the user to select the trunk sensors 2 to be used to generate the trunk image IM.

The user interface 4, 5 is configured to allow the passenger (for instance the driver) to select the type of trunk view to be displayed on the user interface 4, 5.

The user interface 4, 5 is configured to provide a 3D zoomable view generated from images captured by the trunk sensors.

The user interface 4, 5 is configured to provide a trunk's history through time-stamped screenshots derived from detected trunk change.

The vehicle trunk monitoring system 1 comprises a memory to memorize time-stamped screenshots generated by the trunk sensors 2. The processing unit 3 of the vehicle trunk monitoring system is configured to display information of this historical content of the trunk.

The processing unit 3 of the vehicle trunk monitoring system is set up to operate a deep learning computer vision model capable of detecting specified objects, for instance using a neural network deep learning method to detect specified objects. The neural network deep learning method uses an object detection model based on the boundary of the detected object (such as bounding box, or polygon for instance), in addition to the classification of the detected objects. For example, such neural network deep learning method can be the YOLOv8 model.

The processing unit 3 of the vehicle trunk monitoring system 1 is configured to receive a request from the user to locate a specific object, such as a red suitcase, and to conduct an image analysis using data provided by the trunk sensors 2 to ascertain whether the specific object is present in the trunk or not.

The vehicle trunk monitoring system 1 is also configured to deliver notifications or alarms based on detections made in the trunk by the trunk sensors 2.

For instance, the vehicle trunk monitoring system 1 is configured to deliver notifications or alarms if a weapon, food, or an animal is detected for an extended period of time in the trunk.

The user interface 4,5 is configured to enable the user to inquire about the status of specific objects using either text or voice, through either a phone or the car's interior user interface 4,5.

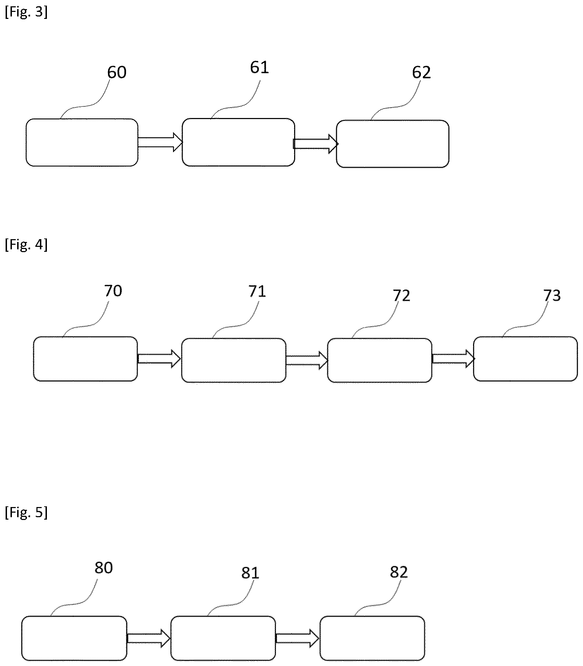

The vehicle trunk monitoring system 1 is configured to operate the following steps:
- request by the user to inspect the content of the trunk T while driving, said request being made via the user interface 4,5 (step 60 in figure 3);
- capture an image of the interior of the trunk T by using the trunk sensors 2 (step 61);
- display images IM captured by the trunk sensors 2 so that the user can inspect the content of the trunk T (step 62).

The vehicle trunk monitoring system 1 is also configured to operate the following steps:
- request by the user to locate a specific object inside the trunk T while driving or not, said request being made via the user interface 4,5 (step 70 in figure 4);
- capture images of different views of the interior of the trunk T by using the trunk sensors 2 (step 71);
- detect and locate the specific object by analyzing the captured images (step 72);
- display images IM captured by the trunk sensors 2 to present the specific object, if present in the trunk T (step 73).

The vehicle trunk monitoring system 1 is also configured to operate the following steps:
- continuously monitor the trunk content using the sensors 2 (step 80 in figure 4);
- analyze a status of the objects in the trunk T to detect abnormal conditions such as a movement or a change in the temperature (step 81);
- deliver notifications or alarms based on detections made in the trunk by the trunk sensors 2 (step 82).

The status of the object can be "Normal" or "Abnormal" depending on detected movements or change I the temperature of the object.

Since several sensors 2 (for instance: thermal, X-Ray, LiDAR ) are available and an AI support is available, it is possible to check several features reflecting the status of the object, for instance:
- Temperature of the object;
- Position of the object;
- Dimensions of the object.

## Claims

1. A vehicle trunk monitoring system (1) comprising:
- at least one trunk sensor (2) configured to capture an image of the interior of the trunk (T);
- a processing unit (3) configured to analyze images received from the trunk sensor (2);
- a user interface (4, 5) configured to display an information (IM) based on the images processed by the processing unit.

2. The vehicle trunk monitoring system (1) according to the preceding claim, wherein comprising a plurality of trunk sensors (2).

3. The vehicle trunk monitoring system according to any one of the preceding claims, wherein the trunk sensor (2) comprises at least one of the following sensors:
- a camera, in particular an RGB camera that captures images using red, green, and blue color channels, the camera being coupled with a light source configured to illuminate the trunk;
- an X-Ray sensor configured to detect for instance hidden contents inside luggage or boxes;
- a thermal camera configured to detect temperature on variable temperature objects;
- a 3D scanner or lidar.

4. The vehicle trunk monitoring system according to any one of the preceding claims, wherein the plurality of trunk sensors (2) provide a multi-view or multi-modal representation of the trunk's contents.

5. The vehicle trunk monitoring system according to any one of the preceding claims, wherein the user interface comprises a screen, in particular:
- a screen (4) permanently mounted on the vehicle, or
- a screen of a smartphone (5), or
- a screen on a headset or glasses to be worn by a passenger of the vehicle.

6. The vehicle trunk monitoring system according to any one of the preceding claims, wherein the user interface (4, 5) is configured to allow the passenger to select the type of trunk view to be displayed on the user interface.

7. The vehicle trunk monitoring system according to any one of the preceding claims, wherein the user interface (4, 5) is configured to provide a trunk's history through time-stamped screenshots derived from detected trunk change.

8. The vehicle trunk monitoring system according to any one of the preceding claims, wherein the processing unit (3) of the vehicle trunk monitoring system is set up to operate a deep learning computer vision model capable of detecting specified objects.

9. The vehicle trunk monitoring system according to any one of the preceding claims, wherein the processing unit (3) of the vehicle trunk monitoring system is configured to receive a request to locate a specific object, such as a red suitcase, and to conduct an image analysis using data provided by the trunk sensors to ascertain whether the specific object is present in the trunk or not.

10. The vehicle trunk monitoring system according to any one of the preceding claims, wherein the vehicle trunk monitoring system (1) is configured to deliver notifications or alarms based on detections made in the trunk by the trunk sensors.

11. The vehicle trunk monitoring system according to any one of the preceding claims, wherein the user interface (4, 5) is configured to enable the user to inquire about the status of specific objects using either text or voice, through either a phone or the car's interior user interface.

12. Vehicle (V) equipped with a trunk monitoring system (1) according to any one of the preceding claims.

13. A vehicle trunk monitoring method comprising the following steps:
- capture an image of the interior of the trunk by using at least one trunk sensor (2);
- display an information, such as an image (IM), derived from of the captured images.

14. The method according to the preceding claim, comprising the following steps:
- receive a request to locate a specific object in the trunk (T),
- conduct an image analysis using data provided by the trunk sensors to ascertain whether the specific object is present in the trunk or not.

15. The method according to the preceding claim 13 or 14, comprising the following steps:
- continuously monitor the trunk content;
- analyze a status of the object to detect abnormal conditions such as a movement or a change in the temperature;
- deliver notifications or alarms based on detections made in the trunk by the trunk sensors.
